# EUROPEAN PATENT APPLICATION

(11) **EP 4 679 937 A1**
(43) Date of publication of application: **14.01.2026**
(21) Application number: 24187207.6
(22) Date of filing: 08.07.2024
(51) Int. Cl.: H05B 3/26, H05B 3/14, H01C 7/02, H01M 10/625, H01M 10/6571

(54) **HEATING ELEMENT COMPRISING A PTC CERAMIC LAYER, ELECTRIC HEATER COMPRISING THE HEATING ELEMENT, AND METHODS FOR MANUFACTURING THE SAME**

(71) Applicant: Hidria d.o.o., 5281 Spodnja Idrija (SI)
(72) Inventor: Herman, Jo t, 5220 Tolmin (SI); Ursic, Peter, 5222 Kobarid (SI)
(74) Representative: Ipsilon

(57) **Abstract**

The invention relates to a method for manufacturing a heating element (10, 110, 210, 310, 410) for an electric heater (1), the method comprising the following steps:
- a coating step comprising coating a substrate (20) with an electrically insulating ceramic layer (30); and
- a depositing step comprising depositing, on the electrically insulating ceramic layer (30), a PTC ceramic layer (40) and electrically conductive traces (50), wherein the electrically conductive traces (50) comprise at least one positive trace (51, 53) and at least one negative trace (52, 54), the positive trace (51, 53) and the negative trace (52, 54) being arranged in a spaced apart manner such that an electrical current may flow from the positive trace (51, 53) to the negative trace (52, 54) through the PTC ceramic layer (40).

The invention further relates to a method for manufacturing an electric heater, and to the products obtained by the methods.

## Description

The invention relates to a heating element comprising a PTC ceramic layer, to an electric heater comprising the heating element, to a method for manufacturing the heating element, and to a method for manufacturing the electric heater.

In the present description, "PTC" means "Positive Thermal Coefficient". PTC materials are materials whose electrical resistance increases when their temperature is raised. In contrast, NTC materials, where "NTC" means "Negative Thermal Coefficient", are materials whose electrical resistance decreases when their temperature is raised.

PTC materials offer an inherent degree of safety in electric heaters, in that the electrical heating of PTC materials is self-regulating: if the temperature of the PTC material is raised (e.g. due to a failure in the electric heater), then the electrical resistance of the PTC material increases, and a further raise in temperature is partly or totally inhibited.

Therefore, it is known to use PTC materials in the manufacture of electric heaters.

For example, EP 1 370 117 A2 discloses an electric heater with PTC elements, comprising at least one radiating element and at least one PTC element that can be supplied with electric power and is adapted to transmit heat to the radiating element.

Although such an electric heater is satisfactory due to the above-mentioned inherent degree of safety, it is not without drawbacks.

Firstly, according to EP 1 370 117 A2, the radiating elements and the PTC elements are maintained in contact with each other, e.g. by means of leaf springs, within a supporting frame. As a result, the manufacture of the electric heater is not entirely straightforward.

Secondly, for an electric heater intended to operate at high power, a large number of PTC elements may be required, e.g. on the order of several dozens of PTC elements for a heater intended to operate at a voltage of several hundred volts DC. With so many PTC elements, the manufacture of the electric heater becomes cumbersome or even impractical.

The invention aims to overcome these disadvantages.

The invention aims to provide with a PTC heating element which allows for simple manufacture of an electric heater.

The invention aims to provide with a PTC heating element which can be manufactured at a high throughput at moderate cost.

The invention aims to provide with a PTC heating element which is suitable for an electric heater intended to operate at high power.

Therefore, the invention relates to a method for manufacturing a heating element for an electric heater, the method comprising the following steps:
- a coating step comprising coating a substrate with an electrically insulating ceramic layer; and
- a depositing step comprising depositing, on the electrically insulating ceramic layer, a PTC ceramic layer and electrically conductive traces, wherein the electrically conductive traces comprise at least one positive trace and at least one negative trace, the positive trace and the negative trace being arranged in a spaced apart manner such that an electrical current may flow from the positive trace to the negative trace through the PTC ceramic layer.

The method according to the invention enables simple and fast automatic production of the heating element, which yields a high throughput at moderate cost. Further, with the method, the PTC ceramic layer is tightly bound to the electrically insulating ceramic layer, which in turn is tightly bound to the substrate. As result, no additional elements are required to keep the PTC ceramic layer in tight contact with the substrate having the electrically insulating ceramic layer deposited thereon. This simplifies the manufacture of the heating element and therefore the manufacture of an electric heater comprising the heating element.

In certain embodiments, the substrate is made of a heat conductive metal.

In certain embodiments, the heat conductive metal is one of copper, a copper alloy, aluminium, and an aluminium alloy.

In certain embodiments, the electrically conductive traces are made of copper, a copper alloy, silver or a silver alloy.

In some preferred embodiments, the electrically insulating ceramic layer comprises alumina (Al₂O₃). More preferably, the electrically insulating ceramic layer consists of alumina and inevitable impurities.

In this way, the electrically insulating ceramic layer is heat conductive. Accordingly, and especially in case the substrate is made of a heat conductive metal, the heat generated within the PTC ceramic layer is conducted to the substrate via the electrically insulating ceramic layer. As a result, the substrate serves as a heat exchanger, in that the substrate transmits the heat to an outside medium, such as ambient air or some other gas, or a solid, or a liquid.

In some preferred embodiments, the coating step is performed by a thermal spraying process and the depositing step is performed by said thermal spraying process.

In other words, the coating step and the depositing step are both performed by the same thermal spraying process, which increases the throughput of the method of the method while minimizing the amount of required equipment.

Preferably, said thermal spraying process is a plasma spraying process.

In other words, the coating step and the depositing step are both performed by a plasma spraying process. Plasma spraying is particularly suitable considering the materials constituting the substrate, the ceramic layer, the PTC ceramic layer, and the electrically conductive traces.

In one particular embodiment, in the depositing step, at least some of the electrically conductive traces are deposited on the electrically insulating ceramic layer, and the PTC ceramic layer is deposited on the electrically insulating ceramic layer having electrically conductive traces deposited thereon.

In one particular embodiment, all the electrically conductive traces are deposited on the electrically insulating ceramic layer.

In one particular embodiment, part of the electrically conductive traces are deposited on the electrically insulating ceramic layer and part of the electrically conductive traces are deposited on or within the PTC ceramic layer.

In one particular embodiment, in the depositing step, the PTC ceramic layer is deposited on the electrically insulating ceramic layer and the electrically conductive traces are deposited on or within the PTC ceramic layer deposited on the electrically insulating ceramic layer.

In one particular embodiment, the electrically conductive traces consist of a positive trace and a negative trace, and, in the depositing step, one trace among the positive trace and the negative trace is deposited on the electrically insulating ceramic layer, the PTC ceramic layer is deposited on said trace, and the other trace among the positive trace and the negative trace is deposited on the PTC ceramic layer.

In some preferred embodiments, the depositing step further comprises depositing, within the PTC ceramic layer, at least one NTC material inclusion and supplemental electrically conductive traces joined to the NTC material inclusion.

In one particular embodiment, the substrate is a portion of a tube or of a plate.

The NTC material inclusion(s) may provide the heating element with a sensing function, e.g. a temperature sensing function.

In some preferred embodiments, in the depositing step, the PTC ceramic layer is deposited within a heater area of the electrically insulating ceramic layer, and the at least one positive trace and the at least one negative trace are additionally deposited on the electrically insulating ceramic layer outside of the heater area so as to be joined, respectively, to a positive terminal and a negative terminal.

Accordingly, in addition to preventing the electrical current from flowing through the substrate, the electrically insulating ceramic layer conveniently serves as a support surface for the positive terminal and the negative terminal. Moreover, the position of the heater area on the electrically insulating ceramic layer, and/or the shape of the heater area, may be adjusted to provide desired heating characteristics to the heating element and to the electric heater.

The invention extends to a method of manufacturing an electric heater including electrical connectors and at least one heating element manufactured by the method described above.

In one particular embodiment, the method comprises electrically connecting the positive terminal and the negative terminal of the heating element to the electrical connectors.

The invention also relates to a heating element for an electric heater, the heating element comprising:
- a substrate coated with an electrically insulating ceramic layer;
   and
- a PTC ceramic layer and electrically conductive traces, wherein the PTC ceramic layer and the electrically conductive traces are deposited on the electrically insulating ceramic layer, and wherein the electrically conductive traces comprise at least one positive trace and at least one negative trace, the positive trace and the negative trace being arranged in a spaced apart manner such that an electrical current may flow from the positive trace to the negative trace through the PTC ceramic layer.

Such a heating element may be manufactured by the method described above, which provides the same advantages. These advantages are therefore not repeated. It should be noted that any feature presented in relation to the method of manufacturing the heating element is also applicable to the heating element, and vice versa.

In certain preferred embodiments according to the invention, along a thickness direction of the heating element which is perpendicular to the electrically insulating ceramic layer, the PTC ceramic layer may have a thickness of at least 10 µm, e.g. comprised between 10 µm inclusive and 3.0 mm inclusive.

In certain preferred embodiments according to the invention, along the thickness direction of the heating element, the positive trace and/or the negative trace may have a thickness of at least 10 µm, e.g. 10 µm inclusive and 1.0 mm inclusive.

In certain preferred embodiments according to the invention, along a width direction of the heating element which is perpendicular to the thickness direction, the positive trace and/or the negative trace may have a width comprised between 0.50 mm inclusive and 1.50 mm inclusive, e.g. about 1.0 mm.

The invention extends to an electric heater comprising at least one heating element according to the invention.

In certain preferred embodiments according to the invention, the electric heater comprises electrical connectors, and the electrically conductive traces of the heating element are electrically connected to the electrical connectors.

The invention further relates to a heat exchanger comprising an electric heater including at least one heating element according to the invention.

In certain preferred embodiments according to the invention, the heat exchanger further comprises a channel, wherein the channel defines an inner volume for circulating a liquid, and wherein the inner volume is partly delineated by the substrate of the heating element.

In this way, the liquid circulating within the inner volume can be conveniently heated by the electric heater.

The invention further relates to an electric battery, in particular for an electric vehicle, comprising a heat exchanger according to the invention. In this case, the inner volume defined by the channel may be arranged for circulating a liquid associated with the functioning of the electric battery, such as a battery coolant liquid (e.g., ethylene glycol) or a battery conditioning liquid, around and/or within the electric battery.

Irrespective of the formal presentation that is provided, unless explicitly stated otherwise, the various features specified above or hereafter must not be considered to be closely or inextricably linked to each other, the invention can relate to only one of these structural or functional features, or to only some of these structural or functional features, or to only part of one of these structural or functional features, or even to any group, combination or juxtaposition of all or some of these structural or functional features.

Further aims, features and advantages of the invention will become apparent upon reading the following description, which is provided by way of a non-limiting example of some of its possible embodiments, and with reference to the accompanying drawings, in which:
- figure 1 is a schematic sectional view of a heating element according to one embodiment of the invention;
- figure 1A is an enlargement of detail A on figure 1;
- figure 2 is a schematic top view of an electric heater including the heating element of figure 1;
- figure 2A is a schematic sectional view of part of a heat exchanger including the electric heater of figure 2;
- figure 3 is a schematic sectional view of a heating element according to another embodiment of the invention;
- figure 4 is a schematic sectional view of a heating element according to yet another embodiment of the invention;
- figure 5 is a schematic sectional view of a heating element according to still another embodiment of the invention; and;
- figure 6 is a schematic top view of a heating element according to a further embodiment of the invention.

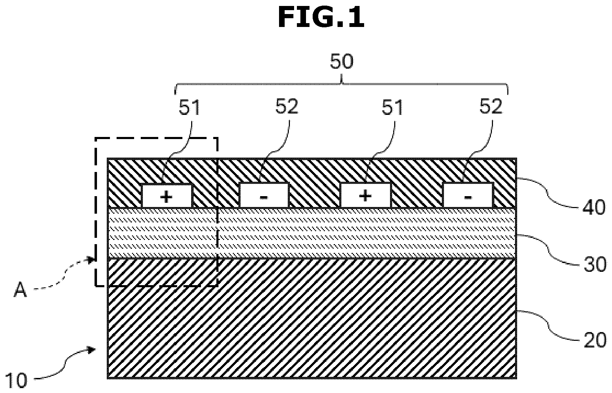

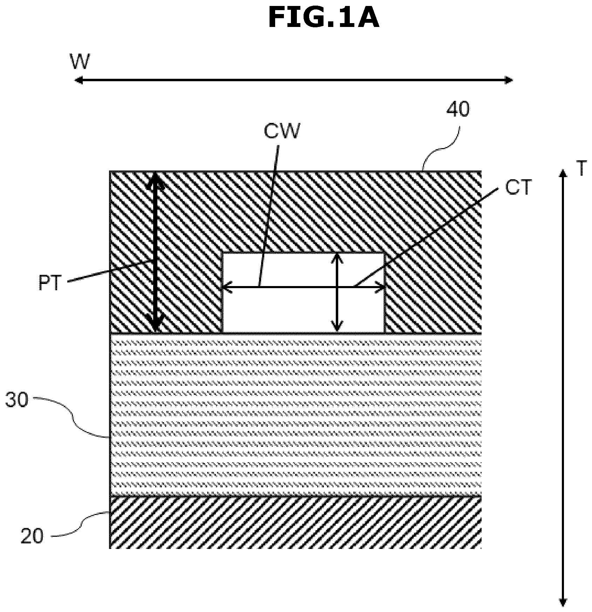

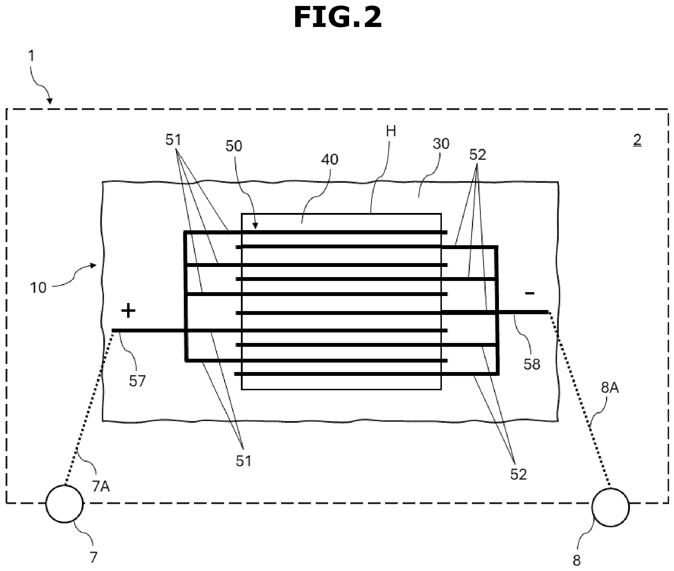

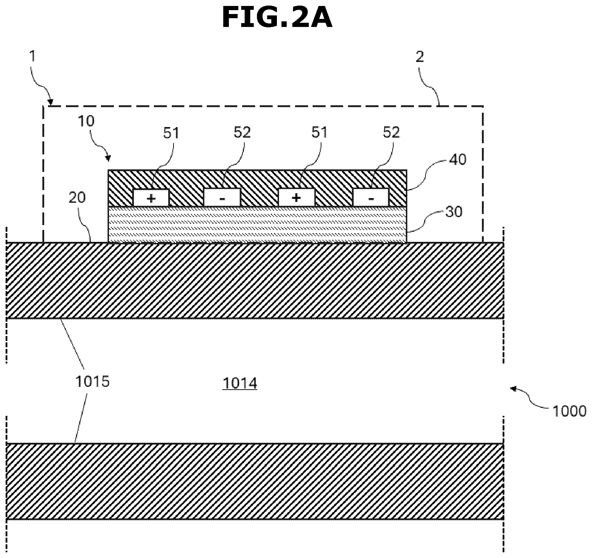

Figure 1 shows schematically and in cross-section a heating element 10 according to a first embodiment. The heating element 10 is also shown schematically and in top view on figure 2.

The heating element 10 comprises a substrate 20, an electrically insulating ceramic layer 30 (hereafter "the ceramic layer 30"), a PTC ceramic layer 40, and electrically conductive traces 50.

The substrate 20 may be made of a heat conductive metal, such as, for instance, copper, a copper alloy, aluminium, or an aluminium alloy.

The ceramic layer 30 is made of an electrically insulating ceramic. The electrically insulating ceramic preferably comprises alumina (Al₂O₃), and more preferably consists of alumina and inevitable impurities.

The substrate 20 is coated with the ceramic layer 30. The substrate 20 may be a portion of a tube or a portion of a plate, in which case the tube or plate is not necessarily entirely coated with the electrically insulating ceramic. Accordingly, the expression "the substrate 20 is coated with the ceramic layer 30" does not necessarily imply that all the exposed surfaces of the substrate 20 are coated with the electrically insulating ceramic.

In the first embodiment and as shown on figure 1, all the electrically conductive traces 50 are deposited on the ceramic layer 30, and the PTC ceramic layer 40 is deposited on the ceramic layer 30 having the electrically conductive traces 50 deposited thereon.

The electrically conductive traces 50 are made of a suitable electrically conductive metal, preferably a highly electrically conductive metal such as copper, a copper alloy, silver or a silver alloy.

Any suitable PTC ceramic may be used for the PTC ceramic layer 40. PTC ceramics are known as such, and accordingly are not described in detail here.

As shown on figure 1 and figure 2, the electrically conductive traces 50 comprise two sets of electrically conductive traces: a set of first traces 51, and a set of second traces 52. It should be noted that the specific number of traces 51, 52 shown on the drawings is not limiting in any way. Any number of traces 51, 52 can be provided. Typically, the number of first traces 51 and the number of first traces 52 are equal.

Preferably and as shown on figure 2, the traces 51, 52 are rectilinear and parallel, which simplifies the manufacture of the heating element 10. However, the traces 51, 52 could have different and/or more complex shapes if desired.

The first traces 51 are joined to a first terminal 57, and the second traces 52 are joined to a second terminal 58.

As shown schematically on figure 2, when the heating element 10 is arranged in an electric heater 1, the terminals 57, 58 are electrically connected to electrical connectors 7, 8 of the electric heater 1. As a result, when the electric heater 1 is supplied with electricity, an electrical current can flow between the electrical connectors 7, 8 via the terminals 57, 58. Thus, the first terminal 57 can be referred to as a positive terminal, and the second terminal 58 can be referred to as a negative terminal.

Correspondingly, the first traces 51 can be referred to as positive traces, and the second traces 52 can be referred to as negative traces. Since the first traces 51 and the second traces 52 are arranged in a spaced apart manner as shown on figures 1 and 2, the above-mentioned electrical current can flow from a positive trace 51 to a negative trace 52 via the PTC ceramic layer 40. And since the ceramic layer 30 is electrically insulating, it prevents the electrical current from flowing through the substrate 20. As a result, the PTC ceramic layer 40 is electrically heated, which provides a self-regulating electrical heating according to the known operating principle of PTC heating elements.

As shown on figure 2, preferably, the PTC ceramic layer 40 is deposited within a heater area H of the ceramic layer 30. In other words, the PTC ceramic layer 40 is circumscribed to the heater area H. Meanwhile, the first traces 51 and the second traces 52 are additionally deposited on the ceramic layer 30 outside of the heater area H so as to be joined, respectively, to the positive terminal 57 and the negative terminal 58, which are also deposited on the ceramic layer 30 outside of the heater area H. Accordingly, in addition to preventing the electrical current from flowing through the substrate 20, the ceramic layer 30 conveniently serves as a support surface for the positive terminal 57 and the negative terminal 58. Moreover, the position of the heater H area on the ceramic layer 30, and/or the shape of the heater area H, may be adjusted to provide desired heating characteristics to the heating element 10 and to the electric heater 1.

The electric heater 1 may be constructed in many ways depending on its intended application.

In one non-limiting example, as shown schematically on figure 2, the electric heater 1 comprises a housing 2. The housing 2 defines an inner volume in which the heating element 10 is arranged, and the housing 2 supports the electrical connectors 7, 8. Reference signs 7A, 8A denote electrical connections from the positive terminal 57 and the negative terminal 58 to the electrical connectors 7, 8, which are depicted schematically by dotted lines. Although the electrically conductive traces 50 are depicted by continuous lines on figure 2, it should be noted that, like in figure 1, the PTC ceramic layer 40 covers part of the electrically conductive traces 50 within the heater area H.

If, as mentioned above, the ceramic layer 30 comprises or consists of alumina, then the ceramic layer 30 is heat conductive. Accordingly, the heat generated within the PTC ceramic layer 40 is conducted to the substrate 20 via the ceramic layer 30. As a result, in case the substrate 20 is made of a heat conductive metal, the substrate 20 serves as a heat exchanger, in that the substrate 20 transmits the heat to an outside medium, such as ambient air or some other gas. Alternatively, the substrate 20 may be made of other materials than a heat conductive metal. In this case, the substrate 20 may or may not serve as heat exchanger which transmits the heat generated within the PTC ceramic layer 40 and conducted via the ceramic layer 30.

The outside medium is not necessarily a gas. It may also be a solid or liquid. Accordingly, in one non-limiting example, the electric heater 1 is intended to heat a liquid. The substrate 20 may be immersed in the liquid or otherwise arranged to transmit heat to the liquid.

Figure 2A shows schematically and in cross-section part of a heat exchanger 1000 according to one such example. The heat exchanger 1000 includes the electric heater 1 shown on figure 2 and a channel 1015. The channel 1015 defines an inner volume 1014 for circulating a liquid. In one example in which the heat exchanger 1000 is included in an electric battery (not shown), the liquid is a liquid associated with the functioning of the electric battery, such as a battery coolant liquid (e.g., ethylene glycol) or a battery conditioning liquid, and the channel 1015 is arranged for circulating the liquid around and/or within the electric battery. The electric battery may be an electric battery for an electric vehicle. The inner volume 1014 is partly delineated by the substrate 20, i.e., the substrate 20 constitutes a part of one or more of the walls of the channel 1015. This can be conveniently achieved by providing the substrate 20 as a portion of a tube which constitutes at least part of the channel 1015, or as a portion of a plate which partly encloses the inner volume 1014. As will be understood from figure 2A, heat generated within the PTC ceramic layer 40 is conducted to the substrate 20 (e.g. made of a heat conductive metal) via the ceramic layer 30, and then conducted to the liquid flowing within the channel 1015, whereby the liquid is heated.

A method for manufacturing the heating element 10 will now be described.

First, in a coating step, the substrate 20 is provided, and the substrate 20 is coated with the ceramic layer 30. As mentioned above, the substrate 20 may be a portion of a tube or a portion of a plate.

Second, in a depositing step, the PTC ceramic layer 40 and the electrically conductive traces 50 are deposited on the ceramic layer 30 so that the PTC ceramic layer 40 and the electrically conductive traces 50 are arranged as described. In one alternative, the electrically conductive traces 50 are deposited first, and then the PTC ceramic layer 40 is deposited on the ceramic layer 30 having the electrically conductive traces 50 deposited thereon. In another alternative, the PTC ceramic layer 40 and the electrically conductive traces 50 are deposited simultaneously on the ceramic layer 30.

The coating step and the depositing step may be performed by a thermal spraying process. Preferably, the coating step and the depositing step are both performed by the same thermal spraying process, which increases the throughput of the method of the method while minimizing the amount of required equipment. More preferably, the thermal spraying process is a plasma spraying process, i.e. the coating step and the depositing step are both performed by a plasma spraying process. Plasma spraying is particularly suitable considering the materials constituting the substrate 20, the ceramic layer 30, the PTC ceramic layer 40, and the electrically conductive traces 50.

Of course, the operating parameters of the thermal spraying process or plasma spraying process may be adjusted between the coating step and the depositing step, considering the properties of the materials constituting the substrate 20, the ceramic layer 30, the PTC ceramic layer 40, and the electrically conductive traces 50.

The method enables simple and fast automatic production of the heating element 10, which yields a high throughput at moderate cost. Further, with the method, the PTC ceramic layer 40 is tightly bound to the ceramic layer 30, which in turn is tightly bound to the substrate 20. As result, no additional elements are required to keep the PTC ceramic layer 40 in tight contact with the substrate 20 having the ceramic layer 30 deposited thereon. This simplifies the manufacture of the heating element 10 and therefore the manufacture of the electric heater 1.

Figure 1A is an enlargement of detail A on figure 1 and illustrates the dimensions of some elements of the heating element 10. These dimensions are expressed with reference to a thickness direction T which is perpendicular to the ceramic layer 30, and to a width direction W which is perpendicular to the thickness direction T. It should be noted that figures 1, 1A, 2, and 2A are schematic and therefore are not necessarily to scale. As shown on figure 1A, the PTC ceramic layer 40 has a thickness PT in the thickness direction T, and the positive traces 51 (and also the negative traces 52) have a thickness CT in the thickness direction T.

The thickness PT may be at least 10 µm, e.g. comprised between 10 µm inclusive and 3.0 mm inclusive. The thickness CT may be at least 10 µm, e.g. comprised between 10 µm inclusive and 1.0 mm inclusive.

The width CW in the width direction W of the positive traces 51 (and also the negative traces 52) may be comprised between 0.50 mm inclusive and 1.50 mm inclusive, e.g. about 1.0 mm.

The above-mentioned dimensions make the heating element 10 suitable for an electric heater intended to operate at high power. For instance, the intensity of the electrical current flowing through the conductive traces may be about 10 A DC. Accordingly, the heating element 10 is suitable for operation under high voltages, on the order of several hundred volts DC, e.g. about 800 V DC.

A method for manufacturing the electric heater 1 comprises manufacturing the heating element 10, and electrically connecting the positive terminal 57 and the negative terminal 58 of the heating element 10 to the electrical connectors 7, 8. The electrical connections 7A, 8A from the positive terminal 57 and the negative terminal 58 to the electrical connectors 7, 8 may be constructed in many ways, e.g., as electrical wires, bus bars, and so on.

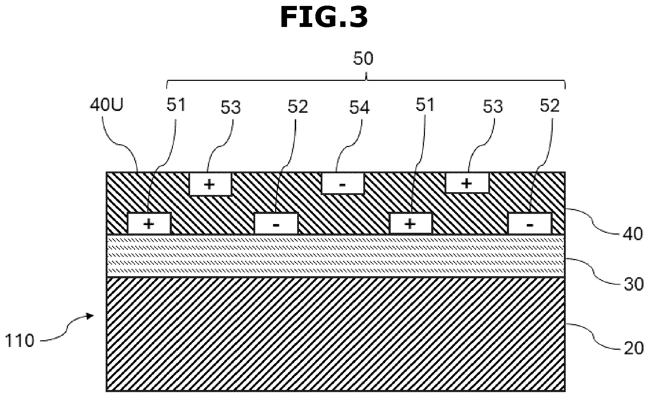

Figure 3 shows schematically and in cross-section a heating element 110 according to a second embodiment. On figure 3, those elements which are similar or identical to the elements shown on figures 1 and 2 have the same reference numbers and are not described again except if necessary.

The heating element 110 differs from the heating element 10 in that not all the electrically conductive traces 50 are deposited on the ceramic layer 30. Rather, positive traces 51 and negative traces 52 are deposited on the ceramic layer 30, while additional positive traces 53 and additional negative traces 54 are deposited on or within the PTC ceramic layer 40. In the example shown on figure 3, the additional positive traces 53 and negative traces 54 are deposited within the PTC ceramic layer 40 so as to be flush with the surface 40U of the PTC ceramic layer 40 opposite the ceramic layer 30. In one alternative, the additional positive traces 53 and negative traces 54 may protrude from the surface 40U. In another alternative, the additional positive traces 53 and negative traces 54 may be deposited on the surface 40U. In yet another alternative, the additional positive traces 53 and negative traces 54 are entirely encased within the PTC ceramic layer 40.

The manufacture of the heating element 110 is similar to the manufacture of the heating element 10 described above, except in that the depositing step is suitably adjusted so that the additional positive traces 53 and negative traces 54 are deposited in their desired positions. In any case, the additional positive traces 53 are joined to the positive terminal 57, and the additional negative traces 54 are also joined to the negative terminal 58. Compared to the heating element 10, with the heating element 110, it is easier to achieve a uniform thickness of the PTC ceramic layer 40.

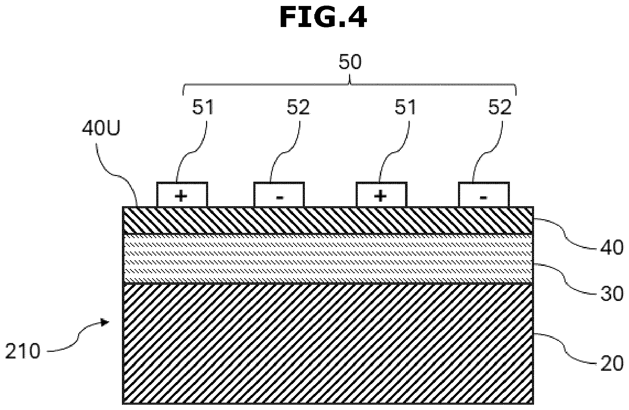

Figure 4 shows schematically and in cross-section a heating element 210 according to a third embodiment. On figure 4, those elements which are similar or identical to the elements shown on figures 1 and 2 have the same reference numbers and are not described again except if necessary.

The heating element 210 differs from the heating element 10 in that the electrically conductive traces 50 are not deposited on the ceramic layer 30. Rather, the electrically conductive traces 50 are deposited on or within the PTC ceramic layer 40, which in turn is deposited on the ceramic layer 30. In the example shown, the electrically conductive traces 50 are deposited on the surface 40U of the PTC ceramic layer 40 opposite the ceramic layer 30. In one alternative, the electrically conductive traces 50 are deposited within the PTC ceramic layer 40 so as to be flush with the surface 40U. In another alternative, the electrically conductive traces 50 are entirely encased within the PTC ceramic layer 40.

The manufacture of the heating element 210 is similar to the manufacture of the heating element 10 described above, except in that the depositing step is suitably adjusted so that the PTC ceramic layer 40 is deposited on the ceramic layer 30, and the electrically conductive traces 50 are deposited in their desired positions on or within the PTC ceramic layer 40 deposited on the ceramic layer 30. Compared to the heating element 10, with the heating element 210, it is easier to achieve a uniform thickness of the PTC ceramic layer 40.

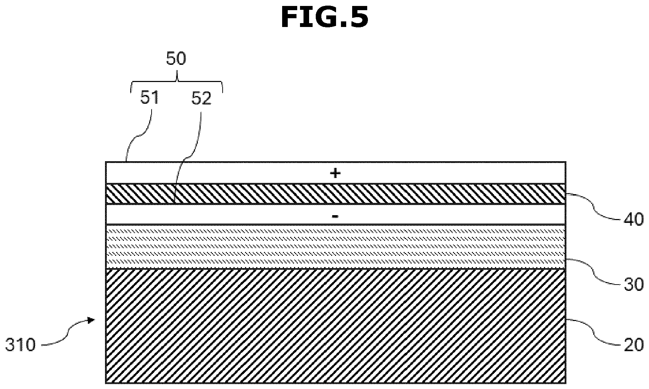

Figure 5 shows schematically and in cross-section a heating element 310 according to a fourth embodiment. On figure 5, those elements which are similar or identical to the elements shown on figures 1 and 2 have the same reference numbers and are not described again except if necessary.

The heating element 310 differs from the heating element 10 in that the PTC ceramic layer 40 is not deposited directly on the ceramic layer 30. Rather, the electrically conductive traces 50 consist of a single positive trace 51 and a single negative trace 52, the negative trace 52 is deposited on the ceramic layer 30, the PTC ceramic layer 40 is deposited on the negative trace 52, and the positive trace 51 is deposited on the PTC ceramic layer 40.

The manufacture of the heating element 310 is similar to the manufacture of the heating element 10 described above, except in that the depositing step is suitably adjusted so that the positive trace 51, the PTC ceramic layer 40 and the negative trace 52 are deposited as described. Compared to the heating element 10, with the heating element 310, it is easier to achieve a uniform thickness of the PTC ceramic layer 40.

Of course, the positive trace 51 and the negative trace 52 may be interchanged, i.e., the positive trace 51 may be deposited on the ceramic layer 30 and the negative trace 52 may be deposited on the PTC ceramic layer 40 deposited on the positive trace 51.

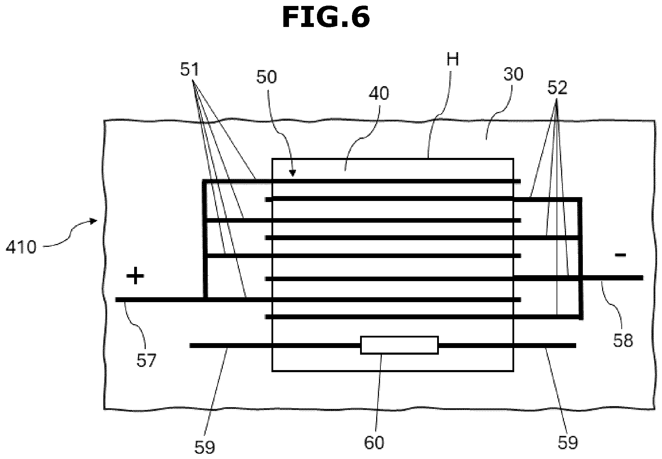

Figure 6 is a top view similar to figure 2 and shows a heating element 410 according to a fifth embodiment. On figure 6, those elements which are similar or identical to the elements shown on figures 1 and 2 have the same reference numbers and are not described again except if necessary.

The heating element 410 differs from the heating element 10 in that if further comprises an NTC material inclusion 60 and supplemental electrically conductive traces 59 to the NTC material inclusion 60. The NTC material inclusion 60 and the supplemental electrically conductive traces 59 are deposited within the PTC ceramic layer 40, whereby the NTC material inclusion 60 and part of the supplemental electrically conductive traces 59 are encased within the PTC ceramic layer 40.

The manufacture of the heating element 410 is similar to the manufacture of the heating element 10 described above, except in that the depositing step is suitably adjusted so that the NTC material inclusion 60 and the supplemental electrically conductive traces 59 are deposited as described.

The NTC material inclusion 60 may provide the heating element 410 with a sensing function, e.g. a temperature sensing function. More than one NTC material inclusion 60 may be deposited if desired.

It should be noted that the fifth embodiment may be combined with the second, third and fourth embodiments, i.e., the heating element 110, 210 or 310 may also comprise the NTC material inclusion(s) 60 and supplemental electrically conductive traces 59.

It should also be noted that the heating element 110, 210, 310 or 410 may be included in the electric heater 1 shown on figures 2 and 2A and in the heat exchanger 1000 shown on figure 2A.

In addition to the heating elements 10, 110, 210, 310, 410 described above, still other embodiments of heating elements may be conceived, as long as an electrical current may flow from a positive trace 51, 53 to a negative trace 52, 54 through the PTC ceramic layer 40.

The invention can be the subject of numerous variations and applications other than those described above. In particular, it is obvious that, unless otherwise specified, the various structural and functional features of each of the aforementioned embodiments must not be considered to be combined and/or closely and/or inextricably linked to one another, but, on the contrary, must be considered to be simple juxtapositions. Furthermore, the structural and/or functional features of the various embodiments described above can be the subject, in whole or in part, of any different juxtaposition or of any different combination.

## Claims

1. - Method for manufacturing a heating element (10, 110, 210, 310, 410) for an electric heater (1), the method comprising the following steps:
- a coating step comprising coating a substrate (20) with an electrically insulating ceramic layer (30); and
- a depositing step comprising depositing, on the electrically insulating ceramic layer (30), a PTC ceramic layer (40) and electrically conductive traces (50), wherein the electrically conductive traces (50) comprise at least one positive trace (51, 53) and at least one negative trace (52, 54), the positive trace (51, 53) and the negative trace (52, 54) being arranged in a spaced apart manner such that an electrical current may flow from the positive trace (51, 53) to the negative trace (52, 54) through the PTC ceramic layer (40).

2. - Method according to claim 1, wherein the coating step is performed by a thermal spraying process and the depositing step is performed by said thermal spraying process, preferably wherein said thermal spraying process is a plasma spraying process.

3. - Method according to any one of claims 1 and 2, wherein, in the depositing step, at least some of the electrically conductive traces (50) are deposited on the electrically insulating ceramic layer (30), and the PTC ceramic layer (40) is deposited on the electrically insulating ceramic layer (30) having electrically conductive traces (50) deposited thereon.

4. - Method according to claim 3, wherein all the electrically conductive traces (50) are deposited on the electrically insulating ceramic layer (30).

5. - Method according to claim 3, wherein part of the electrically conductive traces (50) are deposited on the electrically insulating ceramic layer (30) and part of the electrically conductive traces (50) are deposited on or within the PTC ceramic layer (40).

6. - Method according to any one of claims 1 and 2, wherein, in the depositing step, the PTC ceramic layer (40) is deposited on the electrically insulating ceramic layer (30) and the electrically conductive traces (50) are deposited on or within the PTC ceramic layer (40) deposited on the electrically insulating ceramic layer (30).

7. - Method according to any one of claims 1 to 2, wherein the electrically conductive traces (50) consist of a positive trace (51) and a negative trace (52), and wherein, in the depositing step, one trace among the positive trace (51) and the negative trace (52) is deposited on the electrically insulating ceramic layer, the PTC ceramic layer (40) is deposited on said trace, and the other trace among the positive trace (51) and the negative trace (52) is deposited on the PTC ceramic layer (40).

8. - Method according to any one of claims 1 to 7, wherein the depositing step further comprises depositing, within the PTC ceramic layer (40), at least one NTC material inclusion (60) and supplemental electrically conductive traces (59) joined to the NTC material inclusion (60).

9. - Method according to any one of claims 1 to 8, wherein the substrate (20) is a portion of a tube or of a plate.

10. - Method according to any one of claims 1 to 9, wherein, in the depositing step, the PTC ceramic layer (40) is deposited within a heater area (H) of the electrically insulating ceramic layer (30), and the at least one positive trace (51, 53) and the at least one negative trace (52, 54) are additionally deposited on the electrically insulating ceramic layer (30) outside of the heater area (H) so as to be joined, respectively, to a positive terminal (57) and a negative terminal (58).

11. - Method of manufacturing an electric heater (1) including electrical connectors (7, 8) and at least one heating element (10, 110, 210, 310, 410) manufactured by the method according to claim 10, the method comprising electrically connecting the positive terminal (57) and the negative terminal (58) of the heating element (10, 110, 210, 310, 410) to the electrical connectors (7, 8).

12. - Heating element (10, 110, 210, 310, 410) for an electric heater (1), the heating element comprising:
- a substrate (20) coated with an electrically insulating ceramic layer (30); and
- a PTC ceramic layer (40) and electrically conductive traces (50), wherein the PTC ceramic layer (40) and the electrically conductive traces (50) are deposited on the electrically insulating ceramic layer (30), and wherein the electrically conductive traces (50) comprise at least one positive trace (51, 53) and at least one negative trace (52, 54), the positive trace (51, 53) and the negative trace (52, 54) being arranged in a spaced apart manner such that an electrical current may flow from the positive trace (51, 53) to the negative trace (52, 54) through the PTC ceramic layer (40).

13. - Heating element (10, 110, 210, 310, 410) according to claim 12, wherein the substrate (20) is a portion of a tube or a portion of a plate.

14. - Heat exchanger (1000), the heat exchanger (1000) comprising an electric heater (1) including at least one heating element (10, 110, 210, 310, 410) according to any one of claims 12 to 13 and a channel (1015), wherein the channel (1015) defines an inner volume (1014) for circulating a liquid, and wherein the inner volume (1014) is partly delineated by the substrate (20) of the heating element (10, 110, 210, 310, 410).

15. - Electric battery, in particular for an electric vehicle, the electric battery comprising a heat exchanger (1000) according to claim 14, wherein the inner volume (1014) defined by the channel (1015) is arranged for circulating a battery coolant liquid or a battery conditioning liquid around and/or within the electric battery.
